# EUROPÄISCHE PATENTANMELDUNG

(11) **EP 0 889 254 A2**
(43) Veröffentlichungstag der Anmeldung: **07.01.1999**
(21) Anmeldenummer: 98103563.7
(22) Anmeldetag: 02.03.1998
(51) Int. Cl.: F16C 33/66

(54) **Schmiereinrichtung für eine Wälzlagerdrehverbindung**

(30) Priorität: 04.07.1997 DE 19728606
(71) Anmelder: INA Wälzlager Schaeffler oHG, 91072 Herzogenaurach (DE)
(72) Erfinder: Frank, Hubertus, 91315 Höchstadt (DE)

(57) **Zusammenfassung**

Eine Wälzlagerdrehverbindung weist zwei zueinander konzentrisch angeordnete Laufringe (1, 2) auf, an deren Laufbahnen (4, 5) Wälzkörper an deren Laufbahnen (4, 5) Walzkörper (3) abwälzen. Der eine Laufring (2) ist in seinem den anderen Laufring (1) axial überragenden Abschnitt (6) mit einer den anderen Laufring (1) wenigstens teilweise radial überlappenden Schirmabdeckung (7) versehen, die einen ringförmigen Schmiermittelvorratsraum (8), insbesondere für Schmierfett, begrenzt. Um sicher zu stellen, daß Schmiermittel aus dem Schmiermittelvorratsraum dossiert in den Bereich des Wälzkontakts gelangt, wird vorgeschlagen, daß ein zwischen den beiden Laufringen (1, 2) gebildeter Ringraum (9) stirnseitig von einer wenigstens eine Durchtrittsöffnung (11, 20) begrenzenden Stauscheibe (10, 21) derart abgedeckt ist, daß Schmiermittel aus dem Schmiermittelvorratsraum (8) durch die Durchtrittsöffnung (11, 20) in den Ringraum (9) zu den Wälzkörpern (3) und Laufbahnen (4, 5) gelangt.

## Beschreibung

### Gebiet der Erfindung

Die vorliegende Erfindung betrifft Wälzlagerdrehverbindungen, die beispielsweise bei LKW-Anhängern zur Lagerung des Anhängeraufbaus gegenüber der Lenkachse verwendet werden. Weitere Anwendungsmöglichkeiten bestehen beispielsweise bei Gelenkbussen, Drehgestellen für Straßenbahnen oder U-Bahnen und landwirtschaftlichen Geräten.

### Hintergrund der Erfindung

Aus der DE-A 34 08 664 beispielsweise ist eine Wälzlagerdrehverbindung bekannt, welche aus zwei konzentrisch ineinander angeordneten Laufringen besteht, zwischen denen Wälzkörper an Laufbahnen abrollen, wobei der eine Laufring in seinem den anderen Laufring axial überragenden Abschnitt mit einer den anderen Laufring wenigstens teilweise radial überlappenden Schirmabdekkung versehen ist, die einen ringförmigen Schmiermittelvorratsraum, insbesondere für Schmierfett, begrenzt. Der Schmiermittelvorratsraum ist dabei durch zwei an der Schirmabdeckung ausgebildete Dichtlippen und durch die Stirnfläche des anderen Laufringes begrenzt. Die Schirmabdeckung ist erforderlich, da derartige Wälzlagerdrehverbindungen oftmals Umwelteinflüssen ausgesetzt sind, die eine Korrosion an der Wälzlagerdrehverbindung begünstigen. Der Schmiermittelvorratsraum kann beispielsweise mit Fett gefüllt werden, wobei dadurch der Verschleiß an den Dichtlippen reduziert wird. Weiterhin wird die Rostbildung an den Anlageflächen der Dichtlippen vermieden, was ebenfalls die Lebensdauer der Dichtlippen erhöht. Die Wirkungen dieser bekannten Schmiereinrichtung beschränken sich auf die Erhöhung der Lebensdauer der Dichtlippen, wodurch das Eindringen von Verunreinigungen oder Wasser in das Lagerinnere vermieden wird. Aus dem Schmiermittelvorratsraum gelangt jedoch kein Schmiermittel in den Wälzkontakt der Wälzkörper mit den Laufbahnen.

### Zusammenfassung der Erfindung

Aufgabe der vorliegenden Erfindung ist es daher, eine Wälzlagerdrehverbindung mit den Merkmalen des Oberbegriffs des unabhängigen Anspruchs 1 derart weiterzubilden, daß Schmiermittel aus dem Schmiermittelvorratsraum in den Wälzkontakt gelangt. Erfindungsgemäß wird diese Aufgabe dadurch gelöst, daß ein zwischen den beiden Laufringen gebildeter Ringraum stirnseitig von einer wenigstens eine Durchtrittsöffnung begrenzenden Stauscheibe derart abgedeckt ist, daß Schmiermittel aus dem Schmiermittelvorratsraum durch die Durchtrittsöffnung hindurch in den Ringraum und zu den Wälzkörpern und Laufbahnen gelangt. Die Durchtrittsöffnung ist dabei derart dimensioniert, daß eine dosierte Zuführung von Schmiermittel gewährleistet ist.

Die kreisringförmige Stauscheibe ist vorzugsweise an dem einen Laufring befestigt und deckt den Ringraum ab. Die Durchtrittsöffnung kann beispielsweise durch einen Ringspalt gebildet sein, der durch einander zugewandte und radial einander überlappende Stirnflächen des anderen Laufrings und der Stauscheibe begrenzt ist. Es ist aber selbstverständlich möglich, die Stauscheibe mit über den Umfang verteilt angeordneten Öffnungen zu versehen, die die Durchtrittsöffnungen bilden.

Die Schirmabdeckung überlappt radial und hintergreift den anderen Laufring. Im unterhalb des Schmiermittelvorratsraumes angeordneten Hintergriff zwischen dem anderen Laufring und der Schirmabdeckung ist eine elastische Dichtung vorgesehen. Das Eindringen beispielsweise von Wasser an dieser tiefer gelegenen Dichtung vorbei zum höher gelegenen Schmiermittelvorratsraum ist bei dieser erfindungsgemäßen Weiterbildung erschwert, da jedenfalls die Schwerkraft diesem unerwünschten Eindringen entgegenwirkt. Eine besonders preiswerte Schirmabdeckung ist aus Blech geformt, wobei diese Schirmabdeckung eine zentrale Ausnehmung aufweist, in die ein an die zentrale Ausnehmung angepaßter Ansatz des einen Laufringes eingepreßt ist. Es ist aber selbstverständlich möglich, daß die Schirmabdeckung einstückig mit dem einen Laufring gebildet ist. Die Schirmabdeckung kann mit einem zu den Laufringen koaxialen rohrförmigen Zapfen versehen sein, an dessen dem anderen Laufring zugewandten Stirnseite ein die Stauscheibe bildender Bord einstückig angeformt ist. Diese Variante bietet sich in besonders günstiger Weise für die aus Blech geformte Schirmabdeckung an. Der besondere Vorteil besteht darin, daß keine separate Scheibe zur Bildung der Stauscheibe vorgesehen werden muß. Es ist selbstverständlich möglich, die Stauscheibe einstückig mit dem einen Laufring zu bilden.

### Kurze Beschreibung der Zeichnungen

Die Erfindung wird anhand von fünf in insgesamt fünf Figuren dargestellten Ausführungsbeispielen näher erläutert, wobei jede Figur einen Halbschnitt einer erfindungsgemäßen Schmiereinrichtung für eine Wälzlagerdrehverbindung darstellt.

### Ausführliche Beschreibung der Zeichnungen

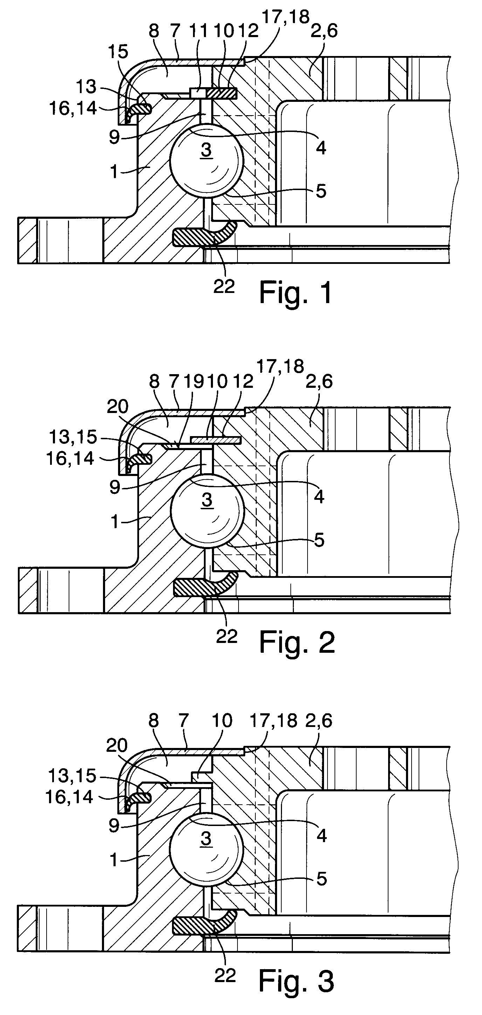

Bei der Schmiereinrichtung für eine Wälzlagerdrehverbindung gemäß Figur 1 sind zwei konzentrisch ineinander angeordnete Laufringe 1, 2 vorgesehen, zwischen denen Kugeln 3 an Laufbahnen 4, 5 abwälzen. Der Laufring 2 ist in seinem den anderen Laufring 1 axial überragenden Abschnitt 6 mit einer Schirmabdeckung 7 versehen, die einen ringförmigen Schmiermittelvorratsraum 8 begrenzt. Ein zwischen den beiden Laufringen gebildeter Ringraum 9 ist stirnseitig an der der Schirmabdeckung 7 zugewandten Seite von einer Stauscheibe 10 abgedeckt. Die Stauscheibe 10 ist mit mehreren über ihren Umfang verteilt angeordneten Öffnungen 11 versehen, durch die Schmiermittel, insbesondere Schmierfett, aus dem Schmiermittelvorratsraum 8 in den Ringraum 9 hin zu den Kugeln 3 und Laufbahnen 4, 5 gelangt. Die kreisringförmige Stauscheibe 10 ist in einer Umfangsnut 12 des Laufrings 2 angeordnet.

Die Schirmabdeckung 7 überlappt den Laufring 1 radial und hintergreift den Laufring 1. Im Hintergriff 13 ist zwischen dem Laufring 1 und der Schirmabdeckung 7 eine elastische Dichtung 14 vorgesehen, die in einer Umfangsnut 15 des Laufring 1 angeordnet ist, und deren Dichtlippe 16 gleitend an der Schirmabdeckung 7 anliegt.

Die aus Blech geformte Schirmabdeckung 7 weist eine zentrale Ausnehmung 17 auf, in die ein Ansatz 18 des Laufrings 2 eingepreßt ist.

Die in der Figur 2 dargestellte erfindungsgemäße Einrichtung unterscheidet sich von der aus der Figur 1 im wesentlichen dadurch, daß axial zwischen der Stauscheibe 10 und der Stirnfläche 19 des Laufrings 1 ein Ringspalt 20 gebildet ist, durch den Schmiermittel aus dem Schmiermittelvorratsraum 8 in den Ringraum 9 und zu den Kugeln 3 und Laufbahnen 4, 5 gelangt.

Die in der Figur 3 dargestellte erfindungsgemäße Einrichtung unterscheidet sich von der aus der Figur 2 im wesentlichen dadurch, daß die Stauscheibe 10 einstückig mit dem Laufring 2 ausgebildet ist.

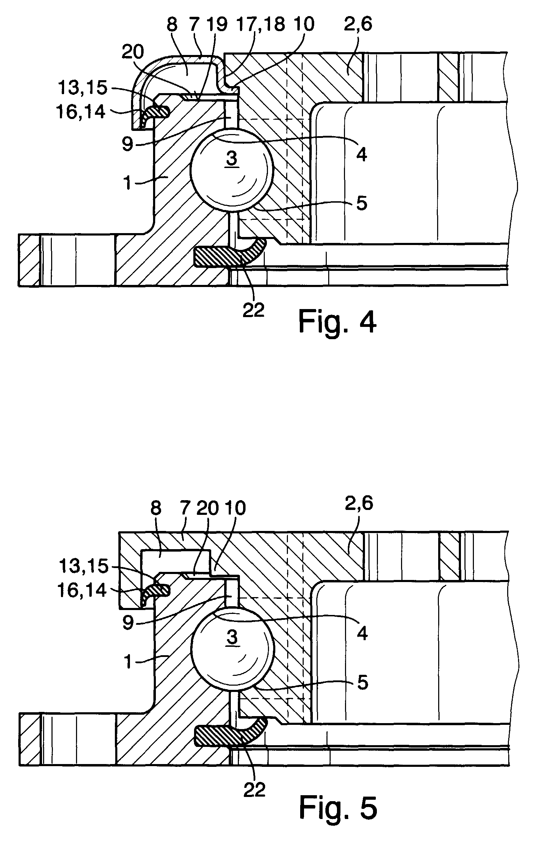

Die in der Figur 4 dargestellte erfindungsgemäße Einrichtung unterscheidet sich von den obenbeschriebenen Ausführungsbeispielen dadurch, daß die Stauscheibe 10 einstückig mit der Schirmabdeckung 7 verbunden ist, wobei ein umgebogener Bord 21 an einem koaxialen Zapfen 22 der Schirmabdeckung 7 die Stauscheibe bildet.

Das in der Figur 5 dargestellte erfindungsgemäße Ausführungsbeispiel unterscheidet sich von dem aus der Figur 3 im wesentlichen dadurch, daß die Schirmabdeckung 7 einstückig mit dem Laufring 2 verbunden ist.

In allen Ausführungsbeispielen ist eine weitere Dichtung 23 vorgesehen, die den Ringraum 9 unterhalb der Kugeln 3 abdichtet.

### Bezugszahlenliste

- 1: Laufring
- 2: Laufring
- 3: Kugel
- 4: Laufbahn
- 5: Laufbahn
- 6: überragender Abschnitt
- 7: Schirmabdeckung
- 8: Schmiermittelvorratsraum
- 9: Ringraum
- 10: Stauscheibe
- 11: Öffnung
- 12: Umfangsnut
- 13: Hintergriff
- 14: elastische Dichtung
- 15: Umfangsnut
- 16: Dichtlippe
- 17: zentrale Ausnehmung
- 18: Ansatz
- 19: Stirnfläche
- 20: Ringspalt
- 21: Bord
- 22: rohrförmiger Zapfen
- 23: Dichtung

## Patentansprüche

1. Wälzlagerdrehverbindung, welche aus zwei konzentrisch ineinander angeordneten Laufringen (1, 2) besteht, zwischen denen Wälzkörper (3) an Laufbahnen (4, 5) abrollen, wobei der eine Laufring (2) in seinem den anderen Laufring (1) axial überragenden Abschnitt (6) mit einer den anderen Laufring (1) wenigstens teilweise radial überlappenden Schiermabdeckung (7) versehen ist, die einen ringförmigen Schmiermittelvorratsraum (8), insbesondere für Schmierfett, begrenzt, **dadurch gekennzeichnet**, daß ein zwischen den beiden Laufringen (1, 2) gebildeter Ringraum (9) stirnseitig von einer wenigstens eine Durchtrittsöffnung (11, 20) begrenzenden Stauscheibe (10, 21) derart abgedeckt ist, daß Schmiermittel aus dem Schmiermittelvorratsraum (8) durch die Durchtrittsöffnung (11, 20) hindurch zu den Wälzkörpern (3) und Laufbahnen (4, 5) gelangt.

2. Wälzlagerdrehverbindung nach Anspruch 1, **dadurch gekennzeichnet**, daß die kreisringförmige Stauscheibe (10) an dem einen Laufring (2) befestigt ist und den Ringraum (9) stirnseitig abdeckt.

3. Wälzlagerdrehverbindung nach Anspruch 1, **dadurch gekennzeichnet**, daß die einander zugewandten und radial überlappenden Stirnflächen (19) des anderen Laufrings (1) und der Stauscheibe (10, 21) einen die Durchtrittsöffnung (20) bildenden Ringspalt (20) begrenzen.

4. Wälzlagerdrehverbindung nach Anspruch 2, **dadurch gekennzeichnet**, daß die Starnscheibe (10) mit die Durchtrittsöffnungen bildenden Öffnungen (11) versehen ist.

5. Wälzlagerdrehverbindung nach Anspruch 1, **dadurch gekennzeichnet**, daß die Schirmabdeckung (7) den anderen Laufring (1) radial überlappt und hinter-greift, wobei im Hintergriff (13) zwischen dem anderen Laufring (1) und der Schirmabdeckung (7) eine elastische Dichtung (14) vorgesehen ist.

6. Wälzlagerdrehverbindung nach Anspruch 1, **dadurch gekennzeichnet**, daß die aus Blech geformte Schirmabdeckung (7) eine zentrale Öffnung (17) aufweist, in die eine an die zentrale Öffnung (17) angepaßter Ansatz (18) des einen Laufrings (2) eingepreßt ist.

7. Wälzlagerdrehverbindung nach Anspruch 1, **dadurch gekennzeichnet**, daß die Schirmabdeckung (7) einen zu den Laufringen (1, 2) koaxialen rohrförmigen Zapfen (22) aufweist, an dessen dem anderen Laufring (1) zugewandten Stirnseite ein die Stauscheibe bildender Bord (21) einstückig angeformt ist.

8. Wälzlagerdrehverbindung nach Anspruch 1, **dadurch gekennzeichnet**, daß die Schirmabdeckung (7) einstückig mit dem einen Laufring (2) gebildet ist.

9. Wälzlagerdrehverbindung nach Anspruch 1, **dadurch gekennzeichnet**, daß die Stauscheibe (10) einstückig mit dem einen Laufring (2) gebildet ist.
